# EUROPEAN PATENT APPLICATION

(11) **EP 1 231 084 A2**
(43) Date of publication of application: **14.08.2002**
(21) Application number: 02394022.4
(22) Date of filing: 11.02.2002
(51) Int. Cl.: B60G 11/16, B60G 3/20

(54) **A vehicle suspension system**

(30) Priority: 09.02.2001 IE 20010128
(71) Applicant: TECHNOLOGY INVESTMENTS LIMITED, County Meath (IE)
(72) Inventor: Timoney, Eanna Pronsias, Navan, County Meath (IE); Muldowney, Ian, Navan, County Meath (IE)
(74) Representative: Schütte, Gearoid

(57) **Abstract**

An independent suspension system (20) for a vehicle has at each side of an axle of the vehicle upper (2) and lower (3) control arms each connected by articulating joints (5, 6, 7, 8) between a vehicle body (12) and a wheel carrier (13) such as a wheel hub to mount the wheel (14) on the vehicle body (12). A compression spring (4) is connected at each end by articulating joints (9, 10) between the vehicle body (12) and one of the control arms (3). The compression spring (4) is connected to the control arm (3) such that the centre of rotation of the articulating joint (10) is below a line (X) joining the centres of rotation of the articulating joints (7, 8) at opposite ends of the control arm (3).

## Description

### BACKGROUND OF THE INVENTION

### Field of the Invention

This invention relates to suspension systems for vehicles, and particularly to independent suspension systems for vehicles.

### Description of Related Art

Independent suspension systems for vehicles frequently employ two control arms, also referred to as "wishbones" or "A-arms", to locate a wheel carrier or hub with respect to the vehicle chassis and to allow movement of the wheel mounted on the hub in a generally vertical direction. A spring that can be virtually any type of spring, such as a coil spring or a pneumatic spring, opposes the upward movement of the wheel. The inboard end of each control arm is connected to the vehicle body by an articulating bearing or joint, while the outboard end of each control arm is connected in each case to the wheel carrier by a second articulating bearing arm joint so as to form a four bar linkage. Frequently, the spring is of an axial type such as a coil spring or a hydro-pneumatic strut, such that the spring deflection is along the same axis as the spring force, and has its upper end connected to the vehicle body while its lower end is connected to one of the two control arms. A disadvantage of the known independent suspension systems arises in that if the effective articulation axis of the lower end of the spring on the control arm to which it is connected is above the line joining the bearings connecting the control arm to the vehicle body and the wheel carrier, the top end of the spring may have to be connected to the vehicle body at an inconveniently high location. Also, because of the geometry, it may be necessary to locate the top of the spring inconveniently close to the vehicle centreline in order to obtain a useful effective spring characteristic referred to the wheel.

The present invention is directed towards overcoming these problems.

### BRIEF SUMMARY OF THE INVENTION

According to the invention, there is provided a vehicle independent suspension system comprising an upper control arm and a lower control arm connecting with articulated joints at their inner ends to the vehicle body and at their outer ends to a wheel carrier, a compression spring connecting at its upper end to the vehicle body with an articulated joint and at its lower end to either the upper control arm or the lower control arm with an articulating joint which has a centre of rotation below the line joining the points where said control arm articulates on the vehicle body and the wheel carrier respectively.

According to one embodiment of the invention there is provided a vehicle independent suspension system having means for supporting a pair of wheels on a vehicle body, each wheel support including:
an upper control arm,
a lower control arm associated with the upper control arm and located beneath the upper control arm,
said control arms co-operating to mount a wheel carrier on a vehicle body,
the upper control arm having an inner end and an outer end,
said inner end of the upper control arm being connected by an articulating joint to the vehicle body,
said outer end of the upper control arm being connected by an articulating joint to the wheel carrier,
the lower control arm having an inner end and an outer end,
said inner end of the lower control arm being connected by an articulating joint to the vehicle body,
said outer end of the lower control arm being connected by an articulating joint to the wheel carrier,
a compression spring,
said compression spring having an upper end and a lower end,
said upper end of the compression spring being connected by an articulating joint to the vehicle body,
said lower end of the compression spring being connected by an articulating joint to one of the upper control arm and the lower control arm,
said articulating joint having a centre of rotation below a line joining centres of rotation of the articulating joints at the inner end and the outer end of said control arm.

In another embodiment a lower end of the compression spring is connected to the lower control arm. Alternatively the lower end of the compression spring maybe connected to the upper control arm.

In a further embodiment when the suspension system is in a normal rest position the compression spring is supported in an upright orientation between the articulating joints connecting the compression spring to the vehicle body and the control arm.

In another embodiment of the invention, the compression spring may be assisted by one or more additional springs.

In a further embodiment, the compression spring comprises one or more coil springs.

In another embodiment, the compression spring comprises a hydro-pneumatic spring.

In another embodiment, an additional compression spring is mounted between the vehicle body and a control arm.

Preferably, the additional spring is provided by a bump stop which is engagable with the control arm as the suspension travels in the direction of compressing the suspension spring.

### BRIEF DESCRIPTION OF THE DRAWINGS

The invention will be more clearly understood by the following description of some embodiments thereof, given by way of example only, with reference to the accompanying drawings, in which:-
Fig. 1 is an elevational view of a prior art suspension system, and
Fig. 2 is an elevational view of an independent suspension system according to the invention.

### DETAILED DESCRIPTION OF THE INVENTION

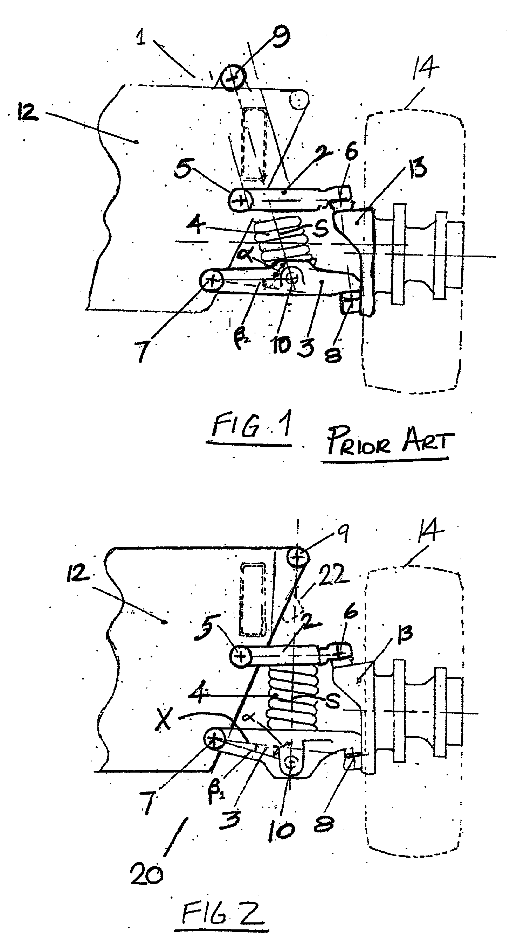

Referring to the drawings, and initially to Fig. 1 thereof, there is illustrated one side of a prior art double control arm independent suspension system 1, the other side of the system, which is located at an opposite side of the vehicle, being similar. The suspension system 1 has an upper control arm 2 connecting to a vehicle body 12 at an articulating joint 5 and to a wheel carrier 13 at an articulating joint 6. A lower control arm 3 connects to the vehicle body 12 at an articulating joint 7 and to the wheel carrier 13 at an articulating joint 8. A coil spring 4 has one end connected to the vehicle body 12 at an articulating joint 9 and the other end of the spring 4 is connected to the lower control arm 3 at an articulating joint 10. It will be appreciated however, that the spring 4 could in fact be connected instead to the upper control arm 2 rather than the lower control arm 3. The wheel carrier 13 may be a wheel hub carrying a wheel 14 which is shown in broken outline in the drawings.

Referring now to Fig. 2, there is shown an independent suspension system of the invention, indicated generally by the reference numeral 20. Parts similar to those described for the prior art suspension system shown in Fig. 1 are assigned the same reference numerals. It will be noted that a distinguishing feature of the present invention is that the articulation joint 10 between the spring 4 and the lower control arm 3 is below the line X joining the bearing or articulation joint centres 7 and 8.

Given the same spring and given that the distance between articulating points 7 and 10 are identical in both suspension systems of Fig. 1 and Fig. 2, the spring characteristic referred to the wheel will be identical in both cases because at each position of the suspension linkage, both the length of the spring 4 and the angle α between the spring line of actions through points 9 and 10 and the line joining points 7 and 10 are the same. However, it will be noted that the mounting point 9 where the top of the spring 4 articulates on the vehicle body 12 is located at a lower level and further from the vehicle centreline in Fig. 2 than in Fig. 1. The construction of the invention permits a more favourable location of the top of the spring 4 because the spring centreline is rotated outward through the angle β1 + β2, where β1 is the angle between the line joining articulation points 7 and 10 and the line X joining points 7 and 8 in Fig. 2, and β2 is the corresponding angle in Fig. 1.

A bump stop 22, shown in broken outline in Fig. 2, may be mounted on the vehicle body 12 to engage the upper control arm 2 as the coil spring 4 is compressed.

It is frequently desirable to have a progressively increasing effective suspension stiffness at the wheel as the suspension moves towards the bump position. In order to accomplish this with a linear spring characteristic, it is necessary that the angle α increase towards 90° as the suspension approaches the bump position so that the spring force has maximum leverage on the control arm at this position. It will be appreciated that the invention makes it easier to achieve this while avoiding the intrusion of the spring on useful space closer to the vehicle centreline.

The invention is not limited to the embodiments hereinbefore described which may be varied in both construction and detail within the scope of the appended claims.

## Claims

1. A vehicle independent suspension system (20) having means for supporting a pair of wheels (14) on a vehicle body (12), each wheel support including an upper control arm (2) and a lower control arm (3) connecting with articulated joints (5, 6, 7, 8) at their inner ends to the vehicle body (12) and at their outer ends to a wheel carrier (13), a compression spring (4) connecting at its upper end to the vehicle body (12) with an articulating joint (9) and at its lower end to either the upper control arm (2) or the lower control arm (3) with an articulating joint (10), **characterised in that** the articulating joint (10) at the lower end of the compression spring (4) has a centre of rotation below a line (X) joining the points (7, 8) where said control arm (3) articulates on the vehicle body (12) and the wheel carrier (13) respectively.

2. A vehicle independent suspension system (20) as claimed in claim 1 including:
an upper control arm (2),
a lower control arm (3) associated with the upper control arm (2) and located beneath the upper control arm (2),
said control arms (2, 3) co-operating to mount a wheel carrier (13) on a vehicle body (12),
the upper control arm (2) having an inner end and an outer end,
said inner end of the upper control arm (2) being connected by an articulating joint (5) to the vehicle body (12),
said outer end of the upper control arm (2) being connected by an articulating joint (6) to the wheel carrier (13),
the lower control arm (3) having an inner end and an outer end,
said inner end of the lower control arm (3) being connected by an articulating joint (7) to the vehicle body (12),
said outer end of the lower control arm (3) being connected by an articulating joint (8) to the wheel carrier (13),
a compression spring (4),
said compression spring (4) having an upper end and a lower end,
said upper end of the compression spring (4) being connected by an articulating joint (9) to the vehicle body (12),
said lower end of the compression spring (4) being connected by an articulating joint (10) to one of the upper control arm (2) and the lower control arm (3),
said articulating joint (10) having a centre of rotation below a line (X) joining centres of rotation of the articulating joints (7, 8) at the inner end and at the outer end of said control arm (3).

3. An independent suspension system (20) as claimed in claim 1 or 2 wherein a lower end of the compression spring (4) is connected to the lower control arm (3).

4. An independent suspension system as claimed in claim 1 or 2 wherein the lower end of the compression spring (4) is connected to the upper control arm (2).

5. An independent suspension system (20) as claimed in any preceding claim wherein when the suspension system (20) is in a normal rest position the compression spring (4) is supported in an upright orientation between the articulating joints (9, 10) connecting the compression spring (4) to the vehicle body (12) and the control arm (3).

6. An independent suspension system (20) as claimed in any preceding claim wherein the compression spring (4) is assisted by one or more additional springs.

7. An independent suspension system (20) as claimed in any preceding claim wherein the compression spring (4) comprises one or more coil springs.

8. An independent suspension system as claimed in any of claims 1 to 6 wherein the compression spring comprises a hydro-pneumatic spring.

9. An independent suspension system (20) as claimed in any preceding claim wherein an additional compression spring (22) is mounted between the vehicle body (12) and a control arm (3).

10. An independent suspension system (20) as claimed in claim 9 wherein the additional spring is provided by a bump stop (22) which is engagable with the control arm (2) as the suspension travels in the direction of compressing the suspension spring (4).
